## Europäisches Patentamt
## European Patent Office
## Office européen des brevets

(19)

(11) Numéro de publication: **0 274 792 B1**

(12) **FASCICULE DE BREVET EUROPEEN**

(45) Date de publication du fascicule du brevet:
**21.03.90**

(51) Int. Cl.⁴: **B29C 33/50,** B29C 33/44, B29D 1/00, B29C 41/40

(21) Numéro de dépôt: **87202511.9**

(22) Date de dépôt: **15.12.87**

(54) Procédé et dispositif de fabrication de pièces dotées d'un filetage male ou femelle, par application de couches de résine polymérisable armées de fibres sur des faces de référence d'un moule.

(30) Priorité: **18.12.86 FR 8617927**

(43) Date de publication de la demande:
**20.07.88 Bulletin 88/29**

(45) Mention de la délivrance du brevet:
**21.03.90 Bulletin 90/12**

(84) Etats contractants désignés:
**BE DE ES FR GB GR IT**

(56) Documents cités:
**EP-A- 0 108 192**
**DE-A- 2 239 508**
**DE-A- 2 609 198**
**FR-A- 841 369**
**FR-A- 1 559 371**
**FR-A- 2 161 306**
**GB-A- 558 672**
**GB-A- 766 523**
**GB-A- 809 296**
**GB-A- 1 299 404**
**US-A- 3 813 197**
**US-A- 4 000 240**

(73) Titulaire: **SOCIETE NATIONALE DE TRAITEMENT DES EAUX Société Anonyme:, Z.I. Chemin de Piscop, F-95350 ST Brice Sous Foret(FR)**

(72) Inventeur: **Père, Claude, Route de Marsac, F-82140 Saint Antonin Nobie Val(FR)**

(74) Mandataire: **Barre, Philippe, Cabinet Barre-Gatti-Laforgue 95 rue des Amidonniers, F-31069 Toulouse Cédex(FR)**

## Description

L'invention concerne un procédé de fabrication de pièces dotées d'un filetage mâle ou femelle, par application de couches de résine polymérisable armées de fibres sur des faces de référence d'un moule. Elle s'applique à un dispositif mettant en oeuvre ce procédé.

Diverses techniques sont employées à l'heure actuelle pour réaliser des filetages sur des pièces obtenues par moulage d'un matériau polymérisable. Plusieurs procédés consistent dans un premier temps à réaliser des pièces brutes dépourvues de filetages, puis, dans un deuxième temps, à usiner le filetage proprement dit. Cet usinage peut être réalisé soit directement sur la pièce moulée fabriquée, soit en rapportant de la matière, au moyen d'un moule spécifique portant l'empreinte du filetage. Dans ce deuxième cas, la non-homogénéité de l'embout fileté ne permet pas de garantir une bonne résistance des filets. De plus, quelle que soit la méthode utilisée, une double opération est nécessaire pour obtenir le produit fini.

Pour pallier cet inconvénient, d'autres techniques ont été mises au point visant à réaliser le moulage de la pièce et du filetage simultanément. Le principal obstacle rencontré consiste alors à résoudre le problème du démoulage des pièces filetées. Pour résoudre ce problème, les solutions proposées ont consisté soit à utiliser des moules ouvrants, soit à utiliser des mandrins rigides rétractables, soit encore à utiliser des mandrins aptes à être entraînés en rotation afin d'assurer le moulage par dévissage. On voit donc que toutes les solutions proposées pour résoudre le problème posé ont conduit à la réalisation de dispositifs complexes dotés de nombreux organes mobiles. De plus, tout changement de diamètre, de hauteur ou du système de pas de vis du filetage à réaliser, nécessite des transformations importantes et coûteuses, notamment au niveau du moule de fabrication.

Une de ces techniques est notamment décrite dans le brevet DE-A- 2 239 508 qui a trait à un dispositif pour la fabrication de pièces dotées d'un filetage femelle par un procédé d'injection. Ce dispositif comprend une couronne présentant une section compressible adaptée pour se déformer radialement entre deux positions :
- une position de moulage dans laquelle elle est maintenue au moyen d'un arbre logé à l'intérieur de ladite couronne et de forme adaptée pour la dilater radialement,
- une position de démoulage dans laquelle elle revient naturellement par le jeu de son élasticité radiale, après retrait axial de l'arbre, de façon à permettre l'extraction de la pièce filetée.

Comme indiqué ci-avant, cette technique impose donc la présence d'organes mobiles permettant le déplacement de l'arbre, et nécessite des modifications notables du moule lors de tout changement des caractéristiques des filetages à réaliser.

La présente invention se propose de pallier ces inconvénients en permettant un démoulage direct de la pièce filetée, au moyen d'organes simples et peu onéreux.

Un autre objectif de l'invention est de permettre la réalisation de filetages de caractéristiques différentes (hauteur, diamètre, système de pas de vis) sans modifications notables du moule.

Un autre objectif est de permettre la réalisation du filetage, sans interposition de gel-coat entre la pièce à mouler et les filets du moule.

A cet effet, l'invention vise un procédé de fabrication de pièces dotées d'un filetage mâle ou femelle, par application de couches de résine polymérisable armées de fibres sur des faces de référence d'un moule, consistant :
- à disposer sur une face de référence du moule une couronne en un matériau élastique, présentant une section quadrilatérale incompressible dotée de deux faces frontales opposées et de deux faces latérales opposées dont l'une porte l'empreinte du filetage,
- à bloquer la couronne sur la face de référence du moule en immobilisant la face latérale opposée à la face filetée, et en maintenant les deux faces frontales pincées, de façon à interdire toute déformation de ladite couronne,
- à procéder au moulage de la pièce filetée par application des couches de résine sur les faces de référence du moule et sur la face filetée de la couronne,
- à débloquer la couronne du moule, puis à démouler la pièce et à extraire la couronne par le jeu de son élasticité propre.

Ainsi, ce procédé permet de réaliser simultanément le moulage de la pièce et du filetage par application manuelle de couches de résines, le démoulage étant obtenu très aisément en retirant la couronne par le jeu de son élasticité propre. Contrairement aux solutions antérieures complexes, ce procédé permet donc de résoudre le problème du démoulage grâce à des moyens simples et peu onéreux.

En outre, de par sa conception, ce procédé permet de modifier à volonté les caractéristiques du filetage (hauteur, diamètre, système de pas de vis) sans avoir à modifier le moule. Seuls la couronne et, comme on le comprendra mieux plus loin, les moyens porteurs de cette couronne, se doivent d'être adaptés aux caractéristiques du filetage. Un tel procédé permet ainsi, notamment, d'obtenir des filetages de grands diamètres.

En outre, les bavures dépassant la face frontale de la couronne, opposée à la face de référence du moule, sont avantageusement découpées, après le moulage, de façon à parfaire la finition de la pièce moulée.

Par ailleurs, la couronne est généralement réalisée en élastomère. Ce matériau permet, en effet, de réaliser une couronne présentant les qualités requises pour présenter une rigidité satisfaisante lors du moulage de la pièce, et une élasticité suffisante pour permettre le démoulage. De plus, un tel matériau ne requiert pas l'application de gel-coat sur la face latérale de la couronne portant l'empreinte du filetage.

L'invention s'étend à un dispositif pour la fabrication de pièces dotées d'un filetage mâle ou femelle, par application de couches de résine polymérisable armées de fibres sur des faces de référence d'un moule, comprenant :

- une couronne en un matériau élastique présentant une section quadrilatérale incompressible dotée de deux faces frontales opposées et de deux faces latérales opposées dont l'une porte l'empreinte du filetage,
- un mandrin porte-couronne comportant:
. un tronçon cylindrique de diamètre et de hauteur adaptés pour servir d'appui à la face latérale non filetée de la couronne,
. une paroi frontale de forme adaptée pour maintenir pincées les faces frontales de la couronne entre ladite paroi frontale et une face de référence du moule,
- des moyens de fixation démontables du mandrin porte-couronne sur une face de référence du moule.

L'invention exposée ci-dessus dans sa forme générale sera mieux comprise à la lecture de la description qui suit et à l'examen des dessins annexés qui en représentent, à titre d'exemples non limitatifs, trois modes de réalisation préférentiels. Sur ces dessins qui font partie intégrante de la présente description :

- la figure 1 est une coupe schématique éclatée des différents organes constitutifs d'un dispositif conforme à l'invention, permettant la réalisation d'un filetage femelle,
- les figures 2 à 6 sont des coupes schématiques illustrant les différentes étapes de la fabrication d'une pièce présentant un filetage femelle, conformément à l'invention.
- la figure 7 est une coupe schématique éclatée des différents organes constitutifs d'un deuxième mode de réalisation de ce dispositif,
- la figure 8 en est une coupe schématique dans sa position fixée sur le moule, après moulage de la pièce,
- la figure 9 est une coupe schématique éclatée des différents organes d'un dispositif conforme à l'invention, permettant la réalisation d'un filetage mâle,
- la figure 10 en est une coupe schématique dans sa position fixée sur le moule, après moulage de la pièce.

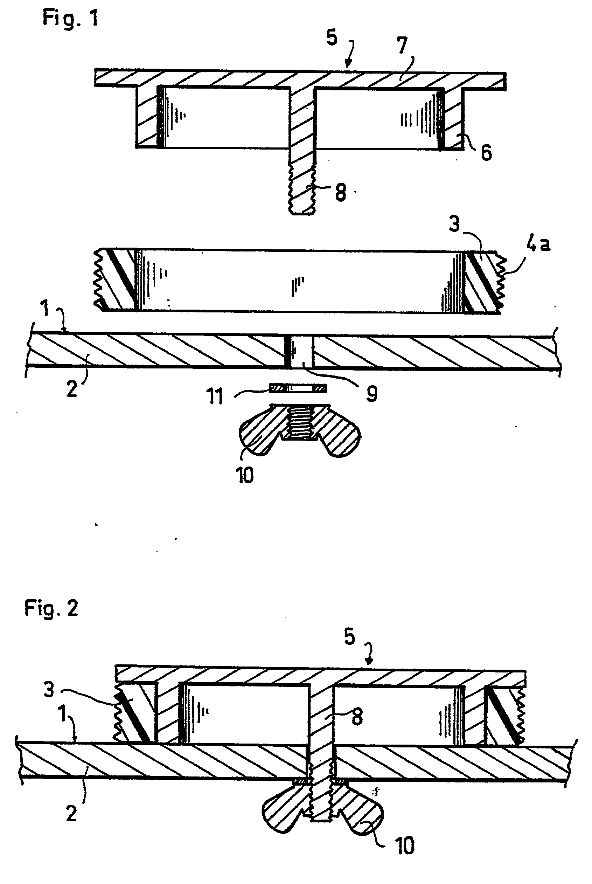

Les dispositifs représentés à titre d'exemples aux figures 1, 7 et 9 permettent la fabrication de pièces dotées d'un filetage par application de couches successives de résines polymérisables, armées de fibres de verre, sur la face de référence 1 d'un moule 2. Ces dispositifs permettent de réaliser la stratification de la pièce et de son filetage simultanément.

Les dispositifs comprennent, en premier lieu, une couronne 3 en élastomère, à base de silicone, présentant une épaisseur adaptée pour lui conférer une bonne rigidité. Cette couronne, de diamètre et de hauteur conjugués des dimensions du filetage à réaliser, est dotée d'une face latérale portant l'empreinte de ce filetage.

Le dispositif représenté à la figure 1 permet la fabrication de pièces dotées d'un filetage femelle. La face latérale filetée de la couronne 3 est, par conséquent, sa face externe 4a.

Le deuxième organe de ce dispositif est constitué par un mandrin 5 porte-couronne autour duquel vient se positionner la couronne 3. Ce mandrin 5 a pour but, d'une part, d'interdire toutes déformations de cette couronne 3 lors de l'opération de moulage et, d'autre part, d'assurer le maintien de celle-ci sur la face de référence 1 du moule 2.

A cet effet, il comprend un tronçon 6 cylindrique de diamètre extérieur conjugué du diamètre intérieur de la couronne 3, et de même hauteur que cette dernière. Ce tronçon cylindrique 6 est surmonté d'un plateau 7 circulaire de diamètre conjugué du diamètre extérieur de la couronne 3.

Ainsi, le tronçon cylindrique 6 de ce mandrin 5 interdit les déformations radiales de la couronne 3, tandis que le plateau circulaire 7 maintient pincées les faces frontales de cette dernière entre la face de référence 1 du moule 2 et ledit plateau.

La fixation du mandrin 5 sur le moule 2 est assurée par une queue de positionnement 8 s'étendant sous le plateau circulaire 7, côté partie cylindrique 6, et dotée d'une extrémité libre filetée. Cette queue de positionnement 8 vient se loger dans une lumière 9 ménagée dans la face de référence du moule 1. Le blocage proprement dit est ensuite simplement assuré par un ensemble écrou 10-rondelle 11.

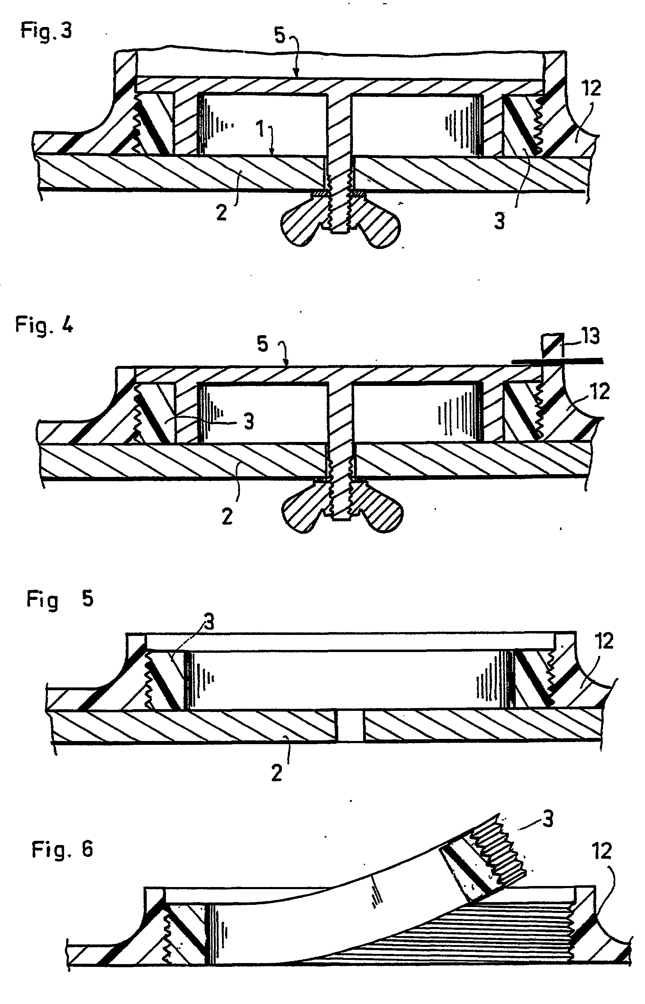

Les figures 2 à 6 illustrent les différentes opérations permettant le moulage d'une pièce filetée 12. Dans un premier temps, l'ensemble couronne 3-mandrin porte-couronne 5 est bloqué sur la face de référence 1 du moule 2 après application de gel-coat sur cette face (figure 2). La stratification de la pièce et de son filetage est ensuite réalisée simultanément, sans nécessiter au préalable une application de gel-coat dans les filets de la couronne 3 (figure 3).

Avant la polymérisation totale de la pièce 12, les bavures 13 faisant saillie au-dessus du plateau circulaire 7 sont découpées, par tout moyen connu en soi, de façon à parfaire la finition de cette pièce moulée (figure 4).

Une fois cette polymérisation obtenue, le mandrin porte-couronne 5 est débloqué du moule 2 (figure 5), puis la pièce 12 est démoulée de façon classique. La dernière opération consiste alors à récupérer la couronne 3 en élastomère, en l'extrayant du taraudage réalisé, sous l'effet de son élasticité propre (figure 6).

Ce dispositif permet donc de réaliser des filetages femelles de diamètres importants, de hauteurs déterminées et dans le système de pas de vis choisi. Les seules adaptations nécessaires concernent la couronne 3 et le mandrin porte-couronne 5, le moule 2 n'ayant, quant à lui, à subir aucune modification, excepté les percements 9 servant au passage de la queue de positionnement 8.

Il est également à noter la possibilité de réaliser plusieurs filetages femelles sur une ou plusieurs faces de référence 1 du moule 2. En effet, quel que soit le nombre de filetages réalisés et l'orientation de leurs axes, le démoulage de la pièce ne posera aucun problème.

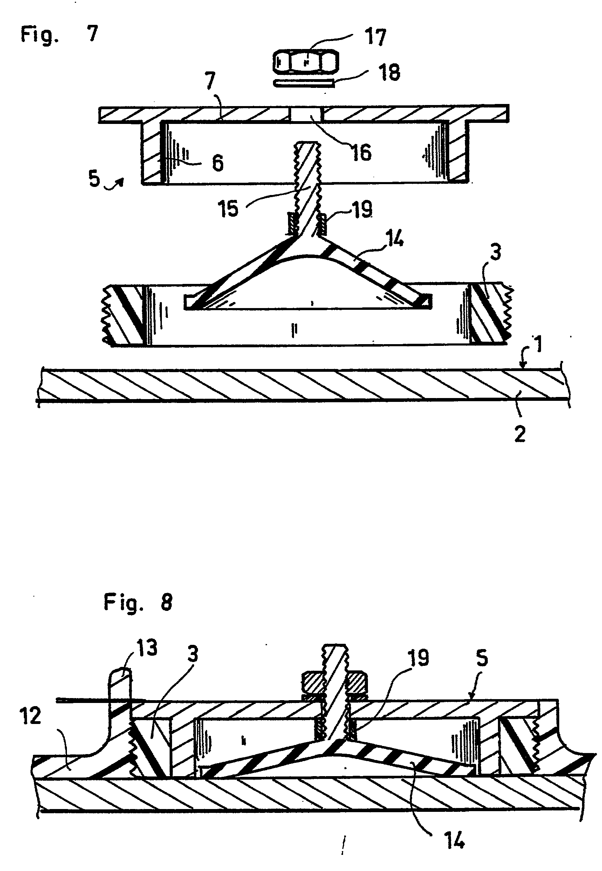

Le dispositif représenté à la figure 7 permet, de même, la fabrication de pièces dotées d'un filetage femelle. Ce dispositif comprend, comme précédemment, une couronne 3 et un mandrin porte-couronne 5. Seuls les moyens de fixation de ce mandrin 5 sur le moule 2 se différencient de ceux décrits ci-dessus.

Ces moyens de fixation comprennent, en effet, une ventouse 14 fixée sous le plateau circulaire 7, côté tronçon cylindrique 6, de façon à venir s'appliquer sur la face de référence 1 du moule 2.

Cette ventouse 14 est en outre fixée de façon amovible sous le plateau circulaire 7. Elle comprend, à cet effet, une tige filetée 15 venant se loger dans une lumière 16 ménagée dans ce plateau circulaire 7. Le blocage proprement dit est ensuite simplement assuré par un ensemble écrou 17-rondelle 18. Par ailleurs, avant le blocage de la ventouse 14 sous le plateau circulaire, un manchon creux 19 est engagé sur la tige filetée 15 de cette dernière. Lors du blocage, le plateau circulaire 7 vient donc en butée contre le manchon 19 et non contre la ventouse 14, évitant ainsi un décollement éventuel de cette dernière.

De plus, en fonction de la longueur de ce manchon 19, une même ventouse 14, dont la longueur de la tige filetée 15 est suffisante, peut être utilisée pour des hauteurs de filetage différentes.

Le moulage de la pièce filetée 12 (figure 8) et son démoulage sont ensuite réalisés de la même façon que décrit précédemment. Le principal avantage de ce deuxième mode de réalisation provient du fait que ce dispositif permet de réaliser des filetages femelles de caractéristiques différentes sans avoir à apporter une seule modification au moule 2. En effet, les percements 9 précédemment ménagés dans le moule 2 pour la fixation du mandrin 5 ne sont plus nécessaires dans ce deuxième cas.

Il est à noter, par ailleurs, que pour des mandrins porte-couronnes 5 de grands diamètres, il est envisageable de prévoir plusieurs ventouses 14 afin d'assurer un bon maintien de ces mandrins sur la face de référence 1 du moule 2.

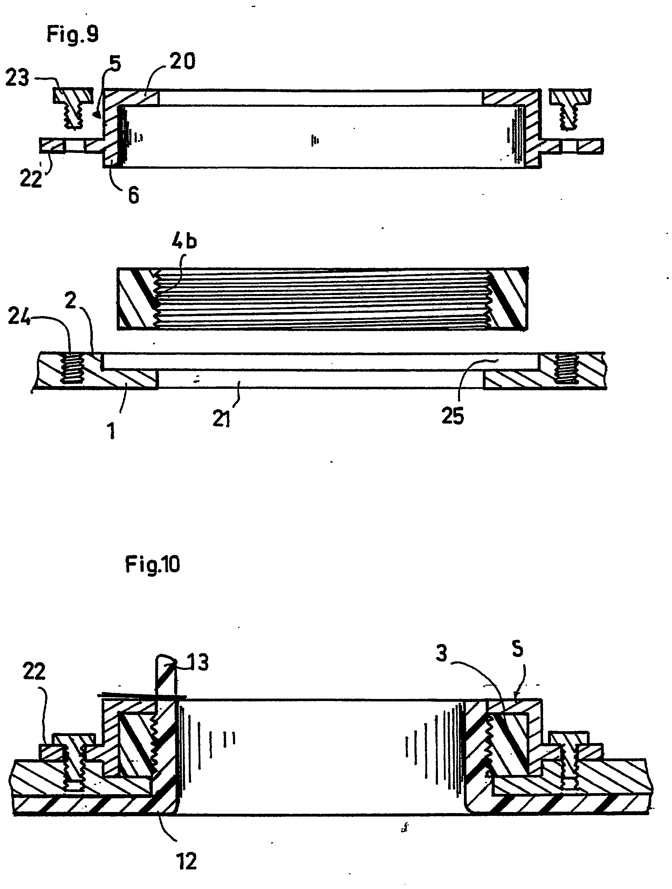

Le troisième dispositif, représenté à la figure 9, permet la fabrication de pièces dotées d'un filetage mâle. La face latérale filetée de la couronne 3 est par conséquent sa face interne 4b.

Le mandrin porte-couronne 5 comprend un tronçon cylindrique 6 de diamètre intérieur conjugué du diamètre extérieur de la couronne 3, et de même hauteur que cette dernière. Ce tronçon cylindrique 6 est surmonté d'un anneau circulaire 20 interne agencé de façon à recouvrir la couronne 3 disposée à l'intérieur du mandrin 5. Comme précédemment, le tronçon cylindrique 6 interdit donc les déformations radiales de la couronne 3, tandis que l'anneau circulaire 20 maintient pincées les faces frontales de cette dernière entre la face de référence 1 du moule 2 et ledit anneau.

Ce mandrin porte-couronne 5 est disposé du côté de la face de référence 1 du moule 2 opposé à la surface d'application des couches de résine. Pour permettre l'application de la résine sur la face latérale filetée 4b de la couronne 3, cette face de référence présente une ouverture circulaire 21 de diamètre au moins égal au diamètre séparant le sommet des filets du filetage mâle à réaliser.

La fixation du mandrin 5 sur le moule 2 est assurée par des pattes de fixation 22 s'étendant orthogonalement par rapport à la face externe du tronçon cylindrique 6 et adaptées pour venir s'appliquer sur la face de référence 1. Ces pattes de fixation 22 sont fixées sur la face de référence 1 par tous moyens de vissage connus, tels que des vis 23 venant se loger dans des inserts 24 intégrés dans cette face de référence.

En outre, un prépositionnement du mandrin 5 peut être assuré en ménageant une échancrure 25 sur la périphérie de l'ouverture circulaire 21 de la face de référence 1, cette échancrure 25 étant d'un diamètre conjugué du diamètre externe du tronçon cylindrique 6.

Le moulage de la pièce filetée 12 (figure 10) et son démoulage sont ensuite réalisés de la même façon que pour une pièce dotée d'un filetage femelle : mise en place puis fixation sur le moule 2 de l'ensemble mandrin 5-couronne 3, application des couches de résine, découpe des bavures 13 dépassant l'anneau circulaire 20, démontage du mandrin 5, extraction de la couronne 3, et enfin, démoulage de la pièce 12 en retirant sa partie filetée à travers l'ouverture 21 de la face de référence 1 du moule 2.

Il est toutefois à noter que l'opération de démoulage nécessite que tous les filetages mâles de la pièce 12 soient réalisés sur une même face de référence 1. Il est cependant possible de réaliser des filetages sur des faces de référence différentes du moule, en utilisant un moule démontable, à condition que les axes de ces filetages soient orientés selon le sens de démontage des faces du moule concernées.

## Revendications

1. Procédé de fabrication de pièces (12) dotées d'un filetage mâle ou femelle, par application de couches de résine polymérisable armées de fibres sur des faces de référence d'un moule (2), ce procédé consistant:
- à disposer sur une face de référence (1) du moule (2) une couronne (3) en un matériau élastique, présentant une section quadrilatérale incompressible dotée de deux faces frontales opposées et de deux faces latérales opposées dont l'une (4a ; 4b) porte l'empreinte du filetage,
- à bloquer la couronne (3) sur la face de référence (1) du moule (2) en immobilisant la face latérale opposée à la face filetée, et en maintenant les deux faces frontales pincées, de façon à interdire toute déformation de ladite couronne,
- à procéder au moulage de la pièce filetée par application des couches de résine sur les faces de référence du moule (2) et sur la face filetée (4a ; 4b) de la couronne (3),
- à débloquer la couronne (3) du moule (2), puis à démouler la pièce (12) et à extraire la couronne par le jeu de son élasticité propre.

2. Procédé selon la revendication 1, dans lequel on découpe, après moulage, les bavures (13) de la pièce moulée (12) dépassant la face frontale de la couronne (3) opposée à la face de référence (1) du moule (2).

3. Procédé selon l'une des revendications 1 ou 2, dans lequel on utilise une couronne (3) en élastomère.

4. Dispositif pour la fabrication de pièces (12) dotées d'un filetage mâle ou femelle, par application de couches de résine polymérisable armées de fibres sur des faces de référence d'un moule (2), ce dispositif comprenant:
- une couronne (3) en un matériau élastique présentant une section quadrilatérale incompressible dotée de deux faces frontales opposées et de deux faces latérales opposées dont l'une (4a ; 4b) porte l'empreinte du filetage,
- un mandrin (5) porte-couronne comportant :
- un tronçon cylindrique (6) de diamètre et de hauteur adaptés pour servir d'appui à la face latérale non filetée de la couronne (3),
. une paroi frontale (7 ; 20) de forme adaptée pour maintenir pincées les faces frontales de la couronne entre ladite paroi frontale et une face de référence (1) du moule (2),
- des moyens de fixation (8-11 ; 14-19 ; 22-24) démontables du mandrin porte-couronne (5) sur une face de référence (1) du moule (2).

5. Dispositif selon la revendication 4 pour la fabrication de pièces dotées d'un filetage femelle, dans lequel la paroi frontale du mandrin (5) est constituée d'un plateau circulaire (7) de diamètre adapté pour recouvrir le tronçon cylindrique (6) et la couronne (3) disposée autour dudit tronçon cylindrique.

6. Dispositif selon la revendication 5, dans lequel les moyens de fixation du mandrin porte-couronne (5) comprennent :
- une queue de positionnement (8) s'étendant sous le plateau circulaire (7), côté tronçon cylindrique (6), et dotée d'une extrémité libre filetée, ladite queue de positionnement étant apte à s'engager dans une lumière (9) ménagée dans la face de référence (1) précitée du moule (2),
- des moyens de vissage (10, 11) conjugués de l'extrémité filetée de la queue de positionnement (8), et adaptés pour maintenir bloqué le mandrin porte-couronne (5) sur la face de référence (1) du moule (2).

7. Dispositif selon la revendication 5, dans lequel les moyens de fixation du mandrin porte-couronne (5) comprennent au moins une ventouse (14) fixée sous le plateau circulaire (7), côté tronçon cylindrique (6), de façon à venir s'appliquer sur la face de référence (1) précitée du moule (2).

8. Dispositif selon la revendication 7, qui comprend des moyens de fixation amovible de chaque ventouse (14) sur le mandrin porte-couronne (5) comportant :
- une tige filetée (15) solidarisée à la ventouse (14) et apte à s'engager dans une lumière (16) ménagée dans le plateau circulaire (7),
- des moyens de vissage (17, 18) conjugués de la tige filetée (15) et adaptés pour maintenir bloquée la ventouse (14) sous le plateau circulaire (7).

9. Dispositif selon la revendication 8, qui comprend un manchon creux (19) apte à être emmanché sur la tige filetée (15) de façon à se trouver interposé entre la ventouse (14) et le plateau circulaire (7).

10. Dispositif selon la revendication 4 pour la fabrication de pièces dotées d'un filetage mâle, dans lequel la face de référence (1) du moule (2) présente une ouverture circulaire (21) de diamètre au moins égal au diamètre séparant les sommets des filets du filetage mâle à réaliser, les moyens de fixation (22-24) du mandrin porte-couronne (5) étant adaptés pour maintenir celui-ci en regard de ladite ouverture.

11. Dispositif selon l'une des revendications 4 ou 10, dans lequel la paroi frontale est constituée d'un anneau circulaire (20) de largeur conjuguée de la face frontale de la couronne (3), ledit anneau étant agencé de façon à recouvrir ladite couronne disposée à l'intérieur du mandrin (5).

12. Dispositif selon l'une des revendications 10 ou 11, dans lequel les moyens de fixation du mandrin porte-couronne (5) comprennent des pattes de fixation (22) en saillie sur la face, dite externe, du tronçon cylindrique (6), opposée à sa face d'appui de la couronne (3), et des moyens de vissage (23, 24) adaptés pour maintenir fixées lesdites pattes de fixation sur la face de référence (1) du moule (2).

13. Dispositif selon l'une des revendications 10, 11 ou 12, qui comprend des moyens de positionnement du mandrin porte-couronne (5) sur la face de référence (1) du moule (2) constitués d'une échancrure (25) ménagée sur la périphérie de l'ouverture circulaire (21) et de diamètre conjugué du diamètre externe du tronçon cylindrique (6).

**Claims**

1. Process for making articles (12) with an external or internal thread by applying layers of fibre-reinforced polymerizable resin to reference surfaces of a mould (2), whereby said process consists:
   – in arranging, on a reference surface (1) of mould (2), a ring (3) made of elastic material, which has an incompressible quadrilateral section provided with two opposite front faces and two opposite lateral faces, one of which (4a; 4b) bears the imprint of a thread,
   – in securing ring (3) to reference surface (1) of mould (2) by immobilising the lateral face opposite to the threaded face and by keeping the two front faces clamped, so as to prevent any deformation of said ring,
   – in proceding to mould the threaded article by applying layers of resin to the reference surfaces of mould (2) and to the threaded face (4a; 4b) of ring (3),
   – in releasing ring (3) from mould (2), detaching article (12) and extracting the ring by means of its inherent elasticity.

2. Process according to claim 1, in which, after moulding, burrs (13) of moulded article (12) projecting beyond the front face of ring (3) opposite reference surface (1) of mould (2) are cut off.

3. Process according to one of claims 1 or 2, in which use is made of a ring (3) consisting of elastomer.

4. Apparatus for making articles (12) with an external or internal thread by applying layers of fibre-reinforced polymerizable resin to reference surfaces of a mould (2), whereby said apparatus comprises:
   – a ring (3) made of elastic material, which has an incompressible quadrilateral section provided with two opposite front faces and two opposite lateral faces, one of which (4a; 4b) bears the imprint of the thread,
– a ring-holder (5) comprising:
. a cylindrical section (6), the diameter and height of which are such as to support the non-threaded lateral face of ring (3),
. a front fact (7; 20) of such shape as to keep the front faces of the ring clamped between said front wall and a reference surface (1) of form (2),
– securing means (8–11; 14–19; 22–24) capable of being removed from ring-holder (5) on a reference surface (1) of mould (2).

5. Apparatus according to claim 4 for making articles with an internal thread, in which the front wall of holder (5) consists in a circular plate (7) with a diameter suitable for covering cylindrical section (6) and ring (3) arranged about said cylindrical section.

6. Apparatus according to claim 5, in which the securing means of ring-holder (5) comprise:
– a positioning spindle (8) extending, on the side of the cylindrical section (6), below circular plate (7) and provided with threaded free end, said positioning spindle being capable of engaging within a hole (9) provided in said reference surface (1) of mould (2),
– screwing means (10, 11) corresponding to the threaded end of positioning spindle (8) and capable of maintaining ring-holder (5) secured to reference surface (1) of mould (2).

7. Apparatus according to claim 5, in which the securing means of ring-holder (5) comprise at least one suction cup (14) secured below circular plate (7) on the side of cylindrical section (6), which a view to being applied to said reference surface (1) of mould (2).

8. Apparatus according to claim 7 comprising means for removable attachment of each suction cup (14) to ring-holder (5) with:
– a threaded rod (15) integral with suction cup (14) and capable of engaging within a hole (16) provided in circular plate (7),
– screwing means (17, 18) corresponding to threaded rod (15) and capable of keeping suction cup (14) below circular plate (7) secured.

9. Apparatus according to claim 8 comprising a hollow sleeve (19) capable of being pressed on to threaded rod (15) so as to be located between suction cup (14) and circular plate (7).

10. Apparatus according to claim 4 for making articles with an external thread, in which reference surface (1) of mould (2) has a circular aperture (21), the diameter of which is at least equal to the diameter separating the crests of the threads of the external thread which is to be produced, the securing means (22–24) of ring-holder (5) being capable to maintain the latter opposite said aperture.

11. Apparatus according to one of claims 4 or 10, in which the front wall consists in a circular annulus (20), the width of which corresponds to the front face of ring (3), said annulus being so designed as to cover said ring located within holder (5).

12. Apparatus according to one of claims 10 or 11, in which the securing means of ring-holder (5) comprise securing lugs (22) projecting from the so-called external face of cylindrical section (6), which is opposite its face supporting ring (3), as well as screwing means (23, 24) capable of maintaining said securing lugs secured to reference surface (1) of mould (2).

13. Apparatus according to one of claims 10, 11 or 12 comprising means for positioning ring-holder (5) on reference surface (1) of mould (2), said means consisting in a recess (25) provided on the periphery of circular aperture (21), with a diameter corresponding to the external diameter of cylindrical section (6).

**Patentansprüche**

1. Verfahren zum Herstellen von mit Außen- oder Innengewinde versehenen Gegenständen (12) durch Aufbringen von Schichten aus faserverstärktem, polymerisierbarem Kunststoff auf Bezugsflächen einer Form (2), wobei dieses Verfahren darin besteht:
– daß auf einer Bezugsfläche (1) der Form (2) ein Aufsatz (3) aus einem elastischen Material angeordnet wird, der einen nicht zusammendrückbaren vierkantigen Querschnitt mit zwei gegenüberliegenden Stirnflächen und zwei gegenüberliegenden Seitenflächen umfaßt, von denen die eine (4a; 4b) mit dem Abdruck des Gewindes versehen ist,
– daß Aufsatz (3) auf Bezugsfläche (1) der Form (2) befestigt wird, indem man die der mit Gewinde versehenen Fläche gegenüberliegende Seitenfläche immobilisiert und die beiden Stirnflächen im geklemmten Zustand erhält, so daß keinerlei Verformung des besagten Aufsatzes stattfinden kann,
– daß der mit Gewinde versehene Gegenstand durch Aufbringen von Kunststoffschichten auf die Bezugsflächen der Form (2) und auf die mit Gewinde versehenen Fläche (4a; 4b) des Aufsatzes (3) geformt wird,
– daß Aufsatz (3) von Form (2) gelöst und dann Gegenstand (12) von der Form entfernt wird und daß der Aufsatz dank der ihm eigenen Elastizität entnommen wird.

2. Verfahren nach Anspruch 1, bei dem die über die Stirnfläche des Aufsatzes (3) gegenüber der Bezugsfläche (1) der Form (2) hinausgehenden Vorsprünge (13) des geformten Gegenstandes (12) abgeschnitten werden.

3. Verfahren nach einem der Ansprüche 1 oder 2, bei dem von einem Aufsatz (3) aus elastomerem Material Gebrauch gemacht wird.

4. Vorrichtung zum Herstellen von mit Außen- oder Innengewinde versehenen Gegenständen (12) durch Aufbringen von Schichten aus faserverstärktem, polymerisierbarem Kunststoff auf Bezugsflächen einer Form (2), wobei das besagte Gerät die folgenden Teile umfaßt:
– Einen Aufsatz (3) aus einem elastischen Material mit einem nicht zusammendrückbaren vierkantigen Querschnitt, der zwei gegenüberliegende Stirnflächen und zwei gegenüberliegende Seitenflächen aufweist, von denen die eine (4a; 4b) mit dem Abdruck des Gewindes versehen ist,
– einen Aufsatzhalter (5) mit

. einem zylindrischen Abschnitt (6), dessen Durchmesser und Höhe so beschaffen sind, daß sie zur Abstützung der nicht mit Gewinde versehenen Seitenfläche des Aufsatzes (3) dienen,

. einer Vorderwand (7; 20), deren Form so beschaffen ist, daß sie die Stirnflächen des Aufsatzes zwischen der besagten Vorderwand und einer Bezugsfläche (1) der Form (2) in geklemmtem Zustand erhält,

– von dem Aufsatzhalter (5) abmontierbaren Befestigungsmitteln (8–11; 14–19; 22–24) an einer Bezugsfläche (1) der Form (2).

5. Vorrichtung nach Anspruch 4 zum Herstellen von mit Innengewinde versehenen Artikeln, bei der die Vorderwand des Halters (5) in einer kreisförmigen Platte (7) besteht, deren Durchmesser so beschaffen ist, daß der zylindrische Abschnitt (6) und Aufsatz (3) rings um den besagten zylindrischen Abschnitt abgedeckt werden.

6. Vorrichtung nach Anspruch 5, bei der die Befestigungsmittel des Aufsatzhalters (5) folgende Teile umfassen:

– Eine Stellspindel (8), die sich auf der Seite des zylindrischen Abschnitts (6) unterhalb der kreisförmigen Platte (7) erstreckt und ein mit Gewinde versehenes freies Ende hat, wobei die besagte Stellspindel in der Lage ist in ein Loch (9) in der besagten Bezugsfläche (1) der Form (2) einzugreifen,

– dem mit Gewinde versehenen Ende der Stellspindel (8) entsprechende Verschraubungsmittel (10; 11), die so beschaffen sind, daß sie Aufsatzhalter (5) in an Bezugsfläche (1) der Form (2) befestigtem Zustand erhalten.

7. Vorrichtung nach Anspruch 5, bei der die Befestigungsmittel des Aufsatzhalters (5) mindestens einen an der Seite des zylindrischen Abschnittes (6) unterhalb der kreisförmigen Platte (7) befestigten Saugnapf (14) zwecks Aufbringung auf die besagte Bezugsfläche (1) der Form (2) umfassen.

8. Vorrichtung nach Anspruch 7, die Mittel zu lösbarer Befestigung jedes Saugnapfes (14) an Aufsatzhalter (5) umfaßt, mit

– einer mit Saugnapf (14) fest verbundenen Gewindestange (15), die in der Lage ist, in ein in der kreisförmigen Platte (7) vorgesehenes Loch (16) einzugreifen,

– der Gewindestange (15) entsprechenden Verschraubungsmitteln (17; 18), die so beschaffen sind, daß sie Saugnapf (14) unterhalb der kreisförmigen Platte (7) im befestigten Zustand erhalten.

9. Vorrichtung nach Anspruch 8 mit einer hohlen Manschette (19), die auf Gewindestange (15) aufgezogen werden kann, so daß sie sich zwischen Saugnapf (14) und der kreisförmigen Platte (7) befindet.

10. Vorrichtung nach Anspruch 4 zum Herstellen von mit Außengewinde versehenen Gegenständen, bei der Bezugsfläche (1) der Form (2) eine kreisförmige Öffnung (21) aufweist, deren Durchmesser mindestens dem die Scheitel der Gewindegänge des herzustellenden Außengewindes trennenden Durchmesser gleich ist, wobei die Befestigungsmittel (22–24) des Aufsatzhalters (5) so beschaffen sind, daß sie diesen gegenüber der besagten Öffnung befestigen.

11. Vorrichtung nach einem der Ansprüche 4 oder 10, bei der die Vorderwand in einem kreisförmigen Ring (20) besteht, dessen Weite der Stirnfläche des Aufsatzes (3) entspricht, wobei der besagte Ring so beschaffen ist, daß er den besagten Aufsatz innerhalb des Halters (5) abdeckt.

12. Vorrichtung nach einem der Ansprüche 10 oder 11, bei der die Befestigungsmittel des Aufsatzhalters (5) von der als außen bezeichneten und der Abstützfläche des Aufsatzes (3) gegenüberliegenden Fläche des zylindrischen Abschnittes (6) Befestigungsvorsprünge (22) umfassen, sowie Verschraubungsmittel (23, 24), die so beschaffen sind, daß sie die besagten Befestiungsvorsprünge an Bezugsfläche (1) der Form (2) im befestigten Zustand erhalten.

13. Vorrichtung nach einem der Ansprüche 10, 11 oder 12, die Mittel zur Einstellung des Aufsatzhalters (5) an Bezugsfläche (1) der Form (2) umfaßt, wobei die besagten Mittel in einer Aussparung (25) bestehen, die im Umkreis der kreisförmigen Öffnung (21) vorgesehen ist und deren Durchmesser dem Außendurchmesser des zylindrischen Abschnittes (6) entspricht.

Fig. 1

Fig. 2

Fig. 3

Fig. 4

Fig 5

Fig. 6

EP 0 274 792 B1

Fig. 7

17
18
7
16
6
5
15
19
14
3
1
2

Fig. 8

13
3
19
5
12
14

Fig.9

Fig.10